(19) Europäisches Patentamt
European Patent Office
Office européen des brevets

(11) Publication number: **0 065 397**
**A2**

(12) # EUROPEAN PATENT APPLICATION

(21) Application number: **82302349.4**

(22) Date of filing: **07.05.82**

(51) Int. Cl.³: **G 02 F 1/13**

(30) Priority: **07.05.81 US 261598**

(43) Date of publication of application: **24.11.82**
**Bulletin 82/47**

(84) Designated Contracting States: **CH DE FR GB IT LI NL**

(71) Applicant: **MINNESOTA MINING AND MANUFACTURING COMPANY, 3M Center, P.O. Box 33427, St. Paul, MN 55133 (US)**

(72) Inventor: **Sun, Lu, 2501 Hudson Road P.O. Box 33427, Saint Paul Minnesota 55133 (US)**
Inventor: **Hsiang Chung, Chi, 2501 Hudson Road P.O. Box 33427, Saint Paul Minnesota 55133 (US)**
Inventor: **Davidson, Loren R., 2501 Hudson Road P.O. Box 33427, Saint Paul Minnesota 55133 (US)**
Inventor: **Davies, David H., 2501 Hudson Road P.O. Box 33427, Saint Paul Minnesota 55133 (US)**

(74) Representative: **Baillie, Iain Cameron et al, c/o Ladas & Parry Isartorplatz 5, D-8000 München 2 (DE)**

(54) **Thermal barrier for thermally addressed liquid crystal devices.**

(57) A thermally addressed liquid crystal display device (10) is disclosed, (see Figure 1) which includes a liquid crystal medium (11) on a substrate (13) and at least one electrode ($8_1$, $8_2$, $8_3$) in thermal contact with the liquid crystal medium for thermally addressing the medium, and in which a thermal insulative barrier is provided between the electrode and substrate to reduce heat flow from the electrode to the substrate.

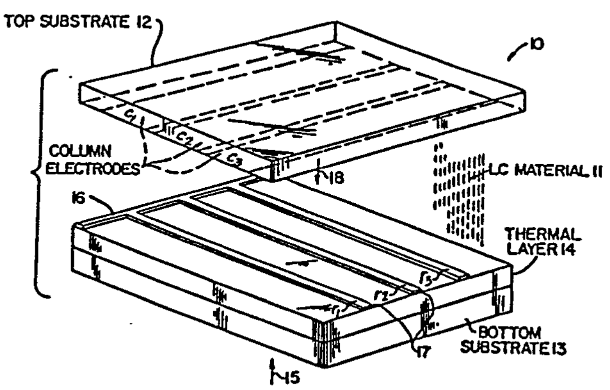


EP 0 065 397 A2

# THERMAL BARRIER FOR THERMALLY ADDRESSED LIQUID CRYSTAL DEVICES

## FIELD OF THE INVENTION

This invention relates to thermally addressed liquid crystal devices, and more particularly to an apparatus and a method for more efficiently heating liquid crystals during thermal addressing of the devices.

## BACKGROUND OF THE INVENTION

In thermally addressed liquid crystal devices, electrical current is supplied to heating electrodes in thermal contact with the liquid crystal medium. The heat generated by these electrodes causes a phase change in the liquid crystal medium, which phase change assists in providing an optical effect; i.e. an image is formed.

This heating must be carefully controlled so that it uniformly penetrates the liquid crystal medium and therefore causes a uniform phase change over the desired area.

It has been discovered that a large percentage of the generated heat is lost to the surrounding support structure, i.e., the rear glass which supports the liquid crystal medium. The heat loss may be as high as 82 percent of the heat generated by the electrodes.

The invention seeks to substantially reduce or eliminate this heat loss by means of a thermal barrier, in order to operate the liquid crystal device more efficiently.

Also, such heat loss reduction will act to preserve and maintain the light reflective characteristics of the device, which light reflective qualities will be discussed in greater detail hereinafter.

## DISCUSSION OF RELATED ART

To the best of our knowledge and belief this is the first time any one has ever used a thermal barrier to

improve the thermal characteristics of a thermally addressed liquid crystal device.

BRIEF SUMMARY OF THE INVENTION

This invention features an apparatus and method for more efficiently heating a liquid crystal medium in a thermally addressed liquid crystal device. The apparatus comprises:

a liquid crystal medium supported upon a thermal layer of insulation; and

at least one heating electrode in thermal contact with said liquid crystal medium for heating said medium said electrode disposed adjacent said thermal layer, said liquid crystal medium absorbing a substantial amount of the heat of said electrode due to the insulative character of said thermal layer.

Defined in still another way, the liquid crystal device of this invention includes:

a liquid crystal medium supported upon a substrate, generally a glass plate;

means to thermally address said liquid crystal medium, including at least one electrode in thermal contact with said medium; and

a thermal barrier disposed between said electrode and said substrate for insulating said electrode from said substrate.

The insulative character of the thermal barrier may be defined as a thermal layer having a coefficient of thermal conductivity approximately less than $15 \times 10^{-4}$ cal $sec^{-1}$ $cm^{-1}$ $°C^{-1}$.

This thermal layer will allow the liquid crystal medium to absorb significantly more of the heat generated by the heating electrode.

The thermal barrier or layer may have a cellular, voided or gas entrained structure to improve its insulative efficacy although it will also function without this internal structure. This layer will generally include at

least one organic polymer usually selected from a class of imides or amides. For this purpose, an imide quinoxaline polymer has been found to work well. Also, vapor coated films of xylylene polymers such as poly(p-xylylene) and poly(chloro-p-xylylene) are desirably utilized, thus providing a very even and uniform coating which accurately conforms to the underlying substrate. The thermal barrier should be made with an approximate thickness in a range from 0.5 to 100 microns.

Either or both of the thermal layer and heating electrode can have a reflective surface, in order to improve the optical contrast of the device.

the method of this invention can be defined as comprising the steps of:

(a) supporting a liquid crystal medium for thermal addressing thereof;

(b) thermally addressing said liquid crystal medium by heating said medium with at least one electrode disposed in thermal contact with said medium; and

(c) insulating said medium and said electrode to allow a substantial amount of the heat generated by said electrode to be transferred to said medium.

Further, this method may also comprise the steps of:

(d) passing light through said medium; and

(e) reflecting said light back through said medium.

BRIEF DESCRIPTION OF THE DRAWINGS

Figure 1 is a perspective, exploded, schematic view of a visual device made in accordance with the invention;

Figure 1a is a schematic cross-sectional view of the device shown in Figure 1;

Figure 1b; 1c; 1d; and 1e are alternate embodiments of the structure depicted in Figure 1a; these embodiments are also illustrated in schematic

cross-section;

Figure 2 is a plan schematic view of the device shown in Figure 1, illustrating how an image can be formed in the liquid crystal medium by a multiplexing technique;

Figure 3 is a graphical illustration of the chronological sequencing of the row and column electrical wave forms of the device depicted in Figure 1.

Figure 4a and 4b show a schematic view of two different light absorbing textures developed in the liquid crystal medium of the device of Figure 1, when the medium passes into its smectic phase; Figure 4a depicts a homeotropic, substantially light transparent texture, and Figure 4b illustrates a substantially light absorbing texture.

## DETAILED DESCRIPTION OF THE INVENTION

Generally speaking, this invention relates to a new method, and visual devices utilizing the thermal addressing of liquid crystal media. The visual devices of this invention feature a highly contrasted dark image on a lighter background.

Where the devices of the invention are multiplexed, they are capable of being multiplexed up to a large number of rows.

This invention provides new displays that incorporate pleochroic dyes of high order parameter into a smectic A liquid crystal material that has a nematic or cholesteric phase upon heating. By using a thermal electric addressing technique described hereinafter, this display has major advantages over the previously known dye switching displays based on the guest host effect and the cholesteric to nematic transition effect.

Smectic A phase is one of the most common liquid crystal phases encountered. Some materials having smectic A phase also exhibit a nematic phase upon heating. One example is the octyl cyano biphenyl:

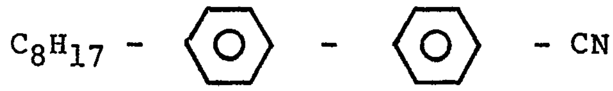

which has a phase transition as follows:

$$\text{crystal} \xrightarrow{20°C} \text{Smectic A} \underset{}{\overset{32°C}{\rightleftharpoons}} \text{Nematic} \overset{40°C}{\rightleftharpoons} \text{Isotropic}$$

The smectic A phase can be aligned homeotropically, as shown in Figure 4a, if the surface of the display is treated with materials such as lecithin. In this structure, the material is transparent.

There are two forms of thermally addressed smectic A displays. One type uses a scanning laser beam to address the display elements. The other type is x y matrix addressed. The row electrodes are heated sequentially with electric current and the display is written by applying voltages on the columns. During the writing process, only the dots associated to the row where the heating current has just been removed are affected. In other words, only the dots where the liquid crystal material is rapidly cooling to the smectic state respond to the writing pulses.

As the liquid crystal material cools rapidly through the nematic or cholesteric phase to the smectic phase, it can form two different textures. With a voltage applied on the column, the liquid crystal material is switched to a homeotropic state during the nematic phase and assumes the homeotropic smectic A texture after cooling is completed. Without the applied voltage, a light absorbing texture is developed instead. Thus, the dots associated with a cooling row electrode can be written into transparent state or a light absorbing state by applying or not applying voltages on the columns. The smectic material used in the inventive display device has positive dielectric anisotropy.

The present invention, however, must be carefully distinguished from other similar systems wherein a scattering texture rather than a light absorbing texture is developed in the smectic material. Displays developing the scattering texture are generally not suitable for direct

viewing, and are often used only in projection systems.

The optical contrast developed by a scattering texture against a transparent texture is similar to those obtained with the dynamic scattering effect. Under many commonly encountered illumination conditions, it will not give a pleasing, high contrast image.

The situation becomes quite different, however, when a pleochroic dye of high order parameter is introduced into the smectic A material. The dye becomes locked into the liquid crystal, and assumes the orientation of the liquid crystal molecules. The dye molecules in the written texture of the host absorb light strongly, transforming the texture into a light absorbing state, either deeply colored or dark. In the homeotropic smectic texture, the dye molecules have minimum absorption, since they do not absorb light incident upon the edge of their molecular structure. This texture, therefore, develops a clear background. This results in a high contrast display that is suitable for direct viewing. No external polarizers are required. The addressing technique is substantially the same as smectic displays without the dye.

Now referring to Figure 1, an exploded view of a typical multiplexed, visual display device 10, is illustrated. The device comprises a liquid crystal medium 11 containing the pleochroic dye, which material is disposed between two glass substrate plates 12 and 13, respectively. The bottom substrate plate 13 supports a thermal barrier layer 14 upon which a plurality of row electrodes $r_1$, $r_2$, $r_3$, etc. are disposed. The row electrodes make up one half of the x y matrix for addressing the liquid crystal material 11. The row electrodes are made of electrically conductive, light reflective material such as silver or aluminum, which can be deposited on the barrier layer 14.

The top plate 12 supports a plurality of column electrodes $c_1$, $c_2$, $c_3$, etc., which make up the remaining half of the x y matrix. The column electrodes are

electrically conductive and can be formed from material such as indium tin oxide.

The liquid crystal medium 11 is generally sealed between the two substrate plates 12 and 13 with the electrodes in contact on either side. Light (generally ambient) is passed through (arrow 18) the glass composite, as shown.

The thermal barrier layer 14 insulates the row electrodes $r_1$, $r_2$, $r_3$, etc., and the liquid crystal medium 11 from the glass substrate 13, such that much of the heat generated by the row electrodes passes into the liquid crystal medium 11 and a smaller amount of the heat energy passes into substrate 13. This provides for a more efficient and efficacious use of energy; the row electrodes now requiring less electrical current in order to cause a phase change in the liquid crystal medium 11.

The physical operation of this display 10 can best be illustrated with a simple example of a 5 x 7 matrix displaying a character "A", as shown in Figure 2. The rows of the matrix are tied together at one end to the common 16 and are sequentially heated by applying electric pulses to the other ends 17. In time zone 0, (see Figure 3) row 1 is heated such that the liquid crystal material over the row 1 electrode $r_1$ is in the isotropic state. In time zone 1, row 2 electrode $r_2$ is heated. In the meantime, row 1 cools down and the dots associated with it are written by applying electric voltage on the column electrodes. In this example, electrodes $C_1$ and $C_5$ have voltage applied such that the dots $r_1c_1$ and $r_1c_5$ will be in the clear state. $C_2$, $C_3$, $C_4$ have no voltage applied, and the dots $r_1c_2$. $r_1c_3$, $r_1c_4$ have a colored light absorbing texture. During time zone 2, row 3 electrode $r_3$ is heated and row 2 cools down, and the voltage on the columns assume the values corresponding to the "on" and "off" pattern of dots associated to row 2. The entire waveform for displaying a character "A", is shown in Fig. 3.

The colored light absorbing texture associated to

the "on" dots is metastable and has long relaxation time generally up to several months. This texture can be automatically erased by heating the row during rewriting of the display, or can be erased by applying voltage on the columns substantially higher than the writing voltage. The erasing voltage can be 100 volts, and the writing or sensitizing voltage can be 20 volts. The large voltage difference (80 volts) between the erasing and writing voltage assures that "cross-talk" will not be a problem, and makes possible a large scale matrix display.

The erase-writing process for this display is very fast. Generally, less than a 100 microsecond writing time can be achieved. If the display is refreshed at $f_r$ times per second, the total number of rows that can be multiplexed will be:

$$m = \frac{1}{f_r \times T_W}$$

Where $T_W$ = the time required to write the row.

With $f_r$ = 30 hertz, a rate which is similar to that utilized in conventional television systems and $T_W$ = 100 microsec., we have m = 333 rows. Thus, the display can be multiplexed up to a rather large number of rows.

In practical display driving, the heating pulse can be applied over several time zones before the cooling and writing cycle. This lowers the voltage requirement for the heating pulses. However, the heating pulse should be short enough to avoid heat spreading to the neighboring rows.

A high contrast is achieved for the colored or black image due to the light absorbing character of the dye material vis-a-vis the transparent background.

The effectiveness of the thermal barrier layer is a method to enhance contrast ratio at lower thermal energy density or alternatively to allow contrast saturation at a lower overall thermal energy density can be seen from Table (1) and Table (2), respectively.

Table (1)

Effect of Typical Barrier Layer

| Energy Density $mj/cm^2$ | Relative Optical Contrast with barrier | without barrier |
|---|---|---|
| 100 | 1.0 | 1.0 |
| 200 | 1.3 | 1.0 |
| 250 | 2.0 | 1.0 |
| 300 | 2.0 | 1.1 |
| 350 | 2.0 | 1.3 |

Barrier layer; 70 microns of polyimide

Table (2)

Effect of Typical Barrier Layer

Energy density to achieve contrast saturation:

with 70 microns polyimide barrier = 230 $mg/cm^2$

without barrier = 550 $mj/cm^2$

($mj/cm^2$: millijoules per $cm^2$)

In a preferred embodiment, the thermal barrier layer is desirably formed by vapor coating a xylylene polymer such as poly(p-xylyene) or poly(chloro-p-xylylene onto the glass substrate. Such polymers are produced by Union Carbide Corporation, under the tradenames Parylene N and Parylene C. The effectiveness of such a xylylene polymer barrier layer, approximately 30 micrometers thick can be seen from Table 3:

Table (3)

Effect of Xylylene Polymer Barrier Layer

Energy Density to Achieve Contrast Saturation:

with 30 μm xylylene barrier layer = 80 $mj/cm^2$

without barrier layer = 300 $mj/cm^2$

The contrast is further improved by the reflective nature of the row electrodes and/or the thermal layer 14, which provide a double light pass back through the medium 11, wherein the unaddressed dye molecules in the light absorbing state (image) can absorb more light as compared to the addressed transparent background.

The medium 11 is depicted in the sensitized (addressed) homeotropic phase in Figure 4a, and is shown in the unaddressed light absorbing phase in Figure 4b. Light (arrow 20) entering the homeotropic material of Figure 4a, passes between the liquid crystal molecules 21. The dye molecules 22 are not light absorbing in this phase, because they are locked in the crystal to confront the light rays upon their edge, as shown.

However, in the light absorbing phase, the dye molecules 22 are locked in the crystal molecules 21 in a randomly angled pattern, as shown in Figure 4b. In this phase, the dye molecules 22 will strongly absorb the impinging light rays 20 to produce an intensely colored or dark image.

The liquid crystal medium 11 can be comprised of at least one octyl cyano biphenyl compound.

More particularly, the liquid crystal will be comprised of a mixture of cyano biphenyl compounds of the following formulas:

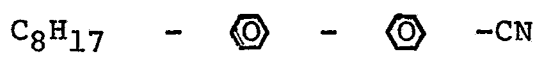

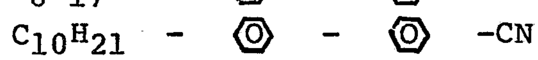

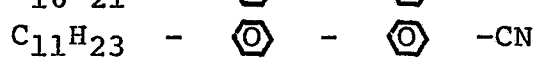

In one type of mixture, the octyl cyano biphenyl can be represented in the mixture in a weight percentage from approximately 35 to 55, and the decyl cyano biphenyl can be represented in a weight percentage from approximately 30 to 60.

In another type of mixture, the undecyl cyano biphenyl can be added to the above, and can have an approximate weight percent range from 15 to 35.

The pleochroic dye can be:

4(4'-N=N-Dimethylamino phenylazo) azobenzene, and can have a weight percent range from 0.5 to 3.0 of the total composition.

More particularly, the octyl and decyl cyano biphenyls may be mixed by weight 55.6 and 44.4 percent, respectively, and the 4(4'-N=N-Dimethylamino phenylazo) azobenzene can have 1 to 1.5 weight percent of the total composition.

Also the octyl decyl, and undecyl cyano biphenyls can be mixed by weight percentage: 44.4; 31.3; and 24.5, respectively. The dye will be mixed with the above in 1 to 1.5 weight percent of the total composition.

Other compositions of the liquid crystal medium can be:

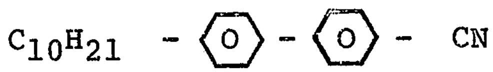

4 - Cyano - 4' - n - decyl biphenyl 45% by wt.

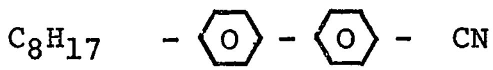

4 - Cyano - 4' - octyl biphenyl 55%; or

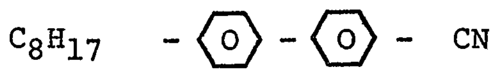

4 - Cyano - 4' - octyl biphenyl 27.5% by wt.

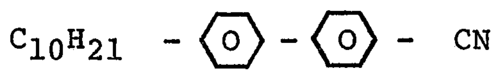

4 - Cyano - 4' - decyl biphenyl 31.5%

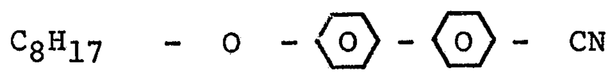

4 - Cyano - 4' octyloxy biphenyl 22.5%

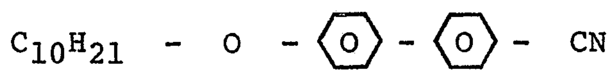

4 - Cyano - 4' - decyloxy biphenyl 18.5%; or

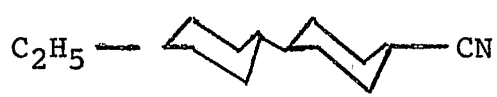

4' - Ethyl - trans, trans - bicyclohexyl - 4 - carbonitrile

To the above liquid crystal compositions, any one of the following coloring agents may be added:

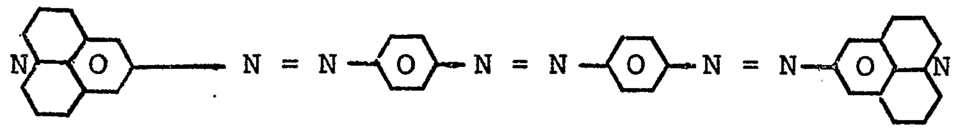

1% by weight

; or

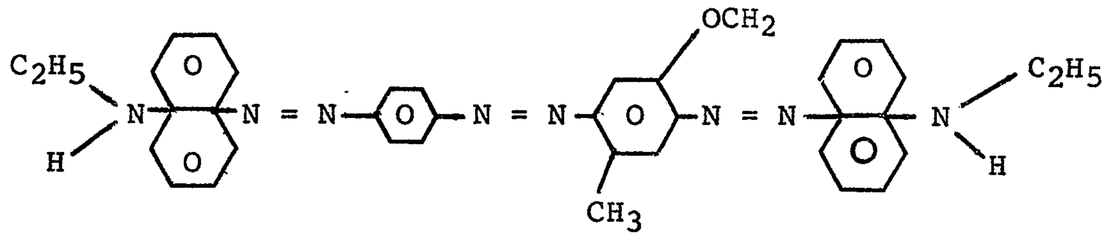

1.2% by wt.

; or

a dye mixture 1.4 % by weight of:

30% by weight

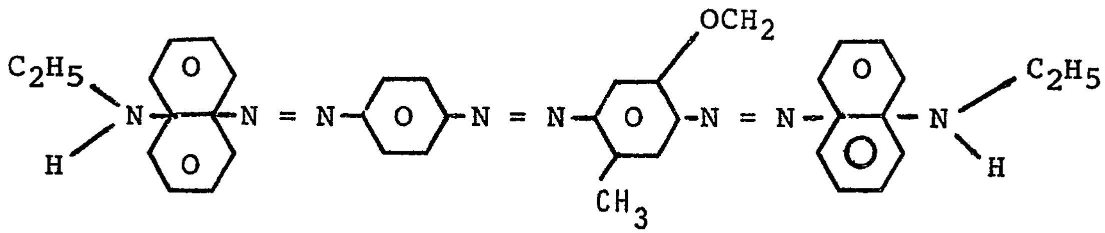

54% 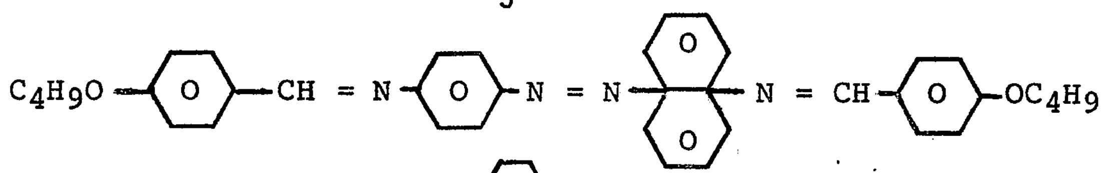

16% 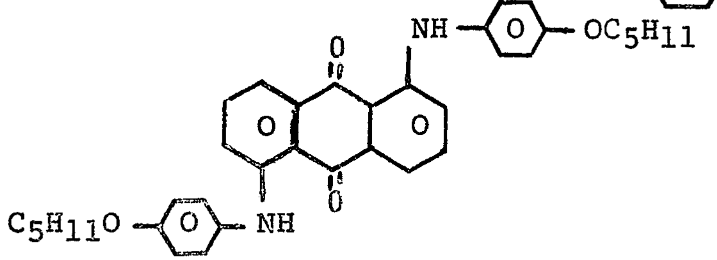

The insulative barrier layer 14 of device 10 in Figure 1 can include both organic polymer layers or appropriate glass fritted layer containing air or vacuum pockets.

To be effective and practical, the barrier layer must satisfy the following constraints:

1. Good adherence to glass.
2. Good adherence to metal conductor layers.
3. Compatible chemically with liquid crystal and dyes.
4. Stable under display seal heat (approximately 150°C) for short period (5-10 minutes).
5. Not subject to crazing or stress breaking over time.
6. Does not swell, losing texture, in presence of liquid crystal material over time.
7. Can be processed through conventional metal/passivation photolithography without loss of properties and allowing line definition in the patterned layers.
8. Low thermal conductivity (less than $15 \times 10^{-4}$ cal $sec^{-1}$ $cm^{-10}$ $C^{-1}$).
9. Low in cost.
10. Easy and reproducible in application.

The properties can be satisfied with appropriate thermoset or thermoplastic polymers. In addition, through the incorporation of glass microballoons (hollow glass spheres), it is possible to use fritted glass composed of at least 30% hollow microballoons as a thermal barrier layer. The air or vacuum pockets provided by the hollow microballoons provide a good thermal insulator. Polymer layers are best selected from the imide or amide family although others meeting the above properties are also usable.

An imide quinoxaline polymer has been found particularly effective. The heat conductivity of various substances is shown in Table 3 below. The heat conductivity is a factor of seven less for a polyamide than for glass, as illustrated.

Table 3

COMPARISON OF THE THERMAL CONDUCTIVITY OF VARIOUS TYPICAL MATERIALS AT 25°C

| Material | $10^{-4}$ cal $sec^{-1}$ $cm^{-1}$ $°C^{-1}$ |
|---|---|
| Al | 5,000 |
| $Al_2O_3$ | 826 |
| MgO | 826 |
| $SnO_2$ | 620 |
| $ThO_2$ (Dense) | 245 |
| $ThO_2$ (16% porosity) | 204 |
| $SiO_2$ (amorphous) | 32 |
| Soda-lime Glass | 25 |
| Flint Glass | 13-20 |
| Polyimide | 3.5 |
| Insulation fire brisk (50% porosity) | 2.5 |
| Polystyrene | 1.7 |
| Polyimide with at least 30% hollow glass balls dispersed therein | 0.5 |

As shown in Figure 1a, the thermal layer 14a can be applied in solid form by means of a knife blade, spinning, or spray over a faceted glass surface (30). This layer 14 can also be made to have a diffusely reflective (faceted) upper surface as shown in Figures 1a, 1c, 1d, and 1e by metallization thereover. The upper surface of the metallized layer then becomes faceted as it accurately conforms to the lower. In figure 1c, the device 10 can have thermal layer 14c with both upper and lower surfaces 31 and 32, directly faceted. The row conductors ($r_1$; $r_2$; etc.) then also have respective faceted reflective surfaces 41 and 42 by replication of the underlying surfaces, as shown in Figures 1a and 1c.

In a preferred embodiment in which a xylylene polymer is provided as the thermal barrier 14c in Figure 1c, the layer can be applied by vapor-deposition polymerization such that a true conformal coating is

isotropically deposited which is uniform in thickness and is pin hole free.

The thermal layer 14d of Figure 1d, can be applied as a polymer sheet which is laminated to the glass 13. A faceted surface 33 can be achieved in layer 14b by bead blasting, chemical etching, mold application or addition of micro-particles. Hollow glass balls (glass microballoons) can also be used as additives to the laminated layer. This results directly in a faceted surface. The reflective surface 41 then is produced by replication over surface 33.

An alternate method uses thick layers of polymer in doctor blades or sheet form. This is then followed by a thin (approx. 1-5 micron) layer of polymer that has selective etchability. On treating this outer film with etch solution that preferentially etches at different rates, a faceted surface is prepared. The differentially etched film can be composed of differing molecular weights or of slightly differing compositions. Good results have been obtained by using a mixture of commercial polyimides, viz,

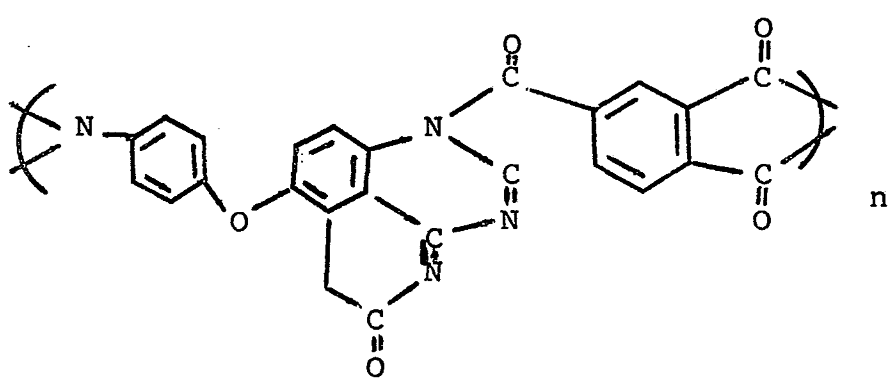

together with another polyimide with the formula:

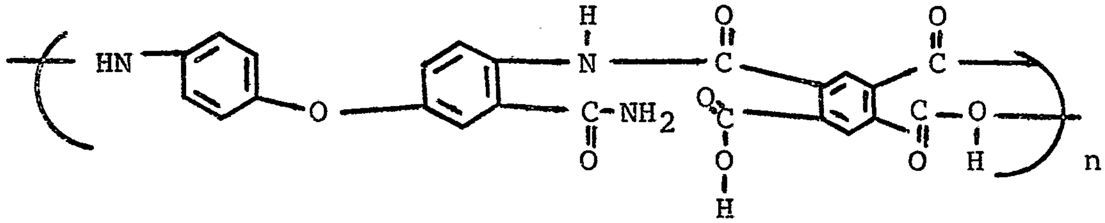

Etching can be done with N-methyl pyrollidone.

Another method of thermal layer application uses an additive to the layer that generates a gas during cure. This gas generation causes a bubble formation in the layer that provides a closed gas pocket in the layer. This improves the thermal conductivity. In addition, the gas bubbles, when breaking at the surface, result in a surface that, when metallized, provides a faceted effect, as shown in layer 14e in Figure 1e.

Figure 1b, also shows a thermal layer 14b having voids or a cellular structure to improve its insulative characteristics. These cellular structures can provide a two-fold increase in the insulative power of the thermal barrier layer. Faceted of the metallization surface of the reflective row electrodes $r_1 r_2$ can then be provided by bead blasting, or by any of the other methods described above.

Having thus described the invention, what is desired to be protected by Letters Patent is presented by the following appended claims:

CLAIMS

1. A thermally addressable liquid crystal device (10), comprising:

a liquid crystal medium (11) supported upon a substrate (13); and

means ($r_1$, $r_2$, $r_3$) for thermally addressing said liquid crystal medium including at least one electrode in thermal contact with said medium, characterized by a thermal barrier (14) disposed between said electrode and said substrate for insulating said electrode from said substrate.

2. The thermally addressed liquid crystal device of claim 1, characterized by said substrate comprising a plate of glass.

3. The thermally addressed liquid crystal device of claim 1, characterized by said thermal barrier (14b) comprising an insulating layer having voids disposed therein.

4. The thermally addressed liquid crystal device of claim 1, characterized by said electrode having a light reflective surface (41).

5. The thermally addressed liquid crystal device of claim 1, characterized by said thermal barrier (14) comprising an insulating layer having a light reflective surface.

6. The thermally addressed liquid crystal device of claim 1, characterized by said electrode ($r_1$, $r_2$, $r_3$) and said thermal barrier (14) having light reflective coplanar surfaces (41, 42 and 31, 32, respectively).

7. The thermally addressed liquid crystal device of claim 1, characterized by said thermal barrier (14e) comprising an insulating layer having entrained gas therein.

8. The thermally addressed liquid crystal device of claim 1, characterized by said thermal barrier comprising an insulating layer having hollow balls dispersed therein.

9. The thermally addressed liquid crystal device of claim 8, characterized by said balls being hollow glass balls.

10. The thermally addressed liquid crystal device of claim 1, characterized by said thermal barrier comprising at least one organic polymer.

11. The thermally addressed liquid crystal device of claim 1, characterized by said thermal barrier comprising at least one polymer selected from a class consisting of imides and amides.

12. The thermally addressed liquid crystal device of claim 1, characterized by said thermal barrier having a cellular structure.

13. The thermally addressed liquid crystal device of claim 1, characterized by said thermal barrier comprising at least one imide quinoxaline polymer.

14. The thermally addressed liquid crystal device of claim 1, characterized by said thermal barrier comprising an xylylene polymer.

15. The thermally addressed liquid crystal device of claim 1, characterized by said thermal barrier comprising a layer of insulating material having an approximate thickness in a range from 0.5 to 100 microns.

16. The thermally addressed liquid crystal device of claim 1, characterized by said thermal barrier comprising a thermally insulating layer having a coefficient of heat conductivity approximately less than $15 \times 10^{-4}$ cal $sec^{-1}cm^{-1}{}^{\circ}C^{-1}$.

17. A method of thermally addressing a liquid crystal device according to claim 1, characterized by the steps of:

(a) supporting said liquid crystal medium for thermal addressing thereof;

(b) thermally addressing said liquid crystal medium by heating said medium with at least one electrode disposed in thermal contact with said medium; and

(c) insulating said medium and said electrode to allow a substantial amount of the heat generated by said electrode to be transferred to said medium.

0065397

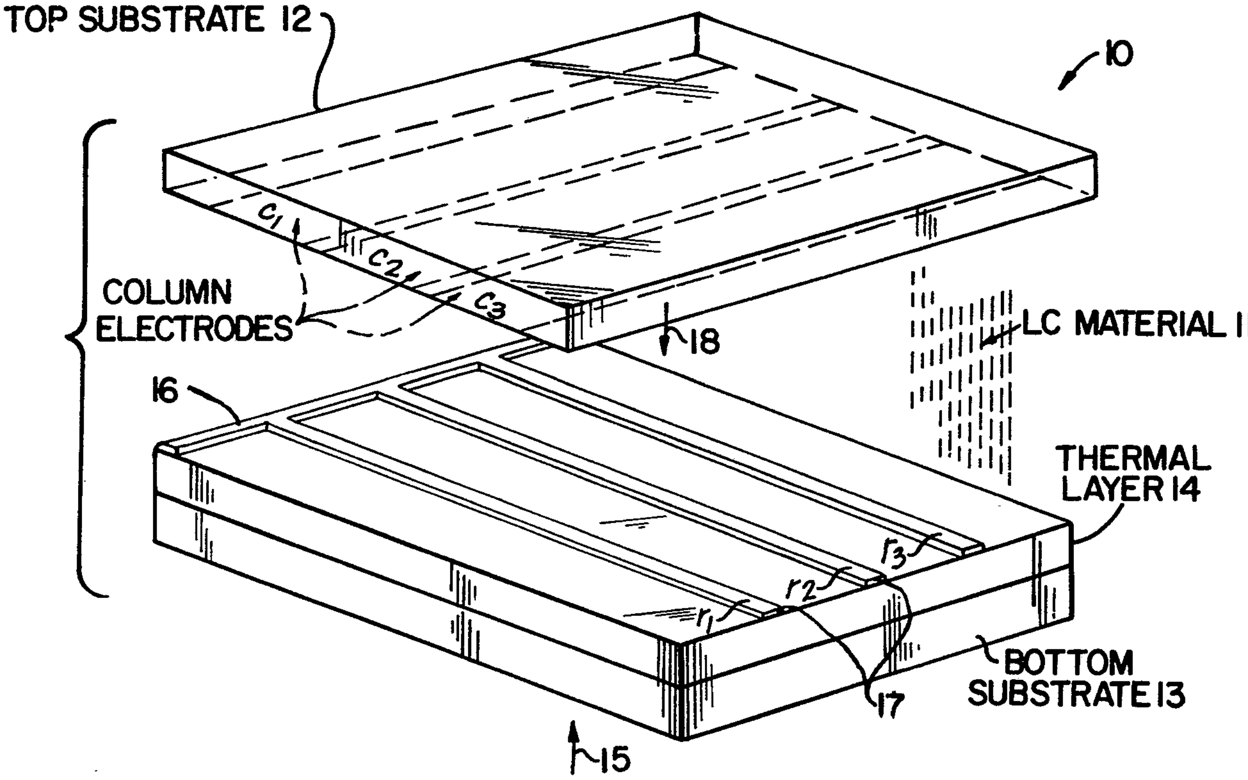


FIG.1

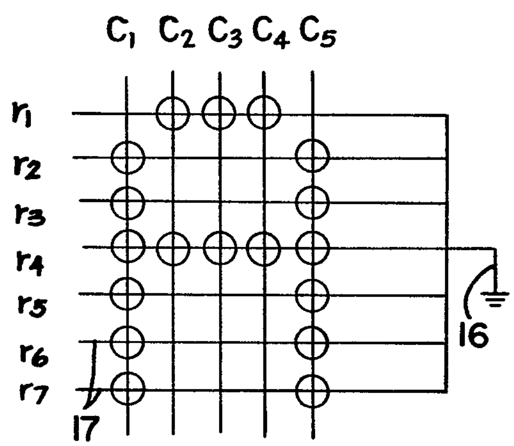


FIG.2

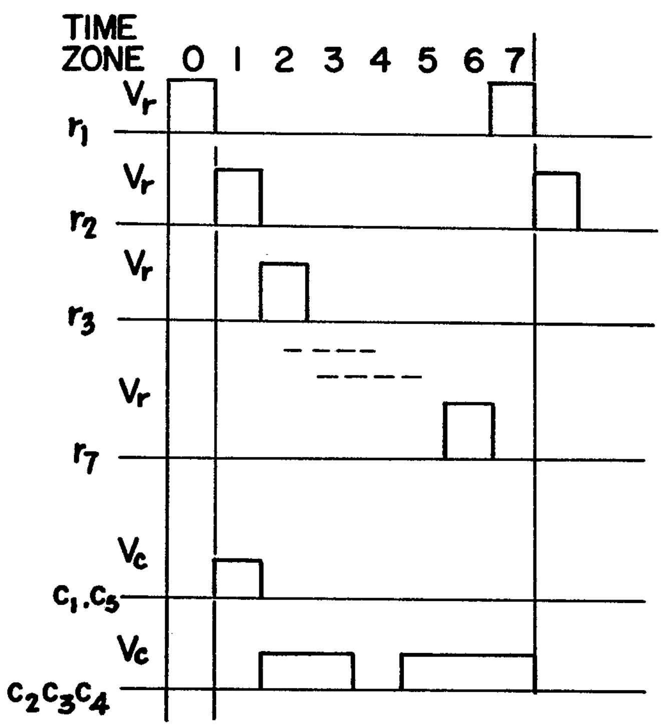


FIG.3

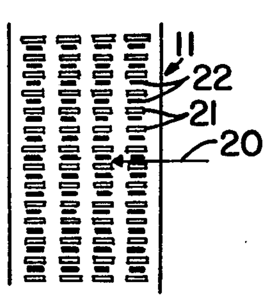


FIG.4a

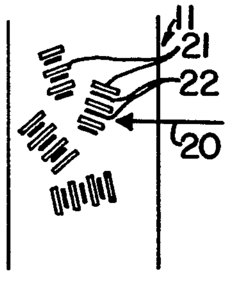


FIG.4b

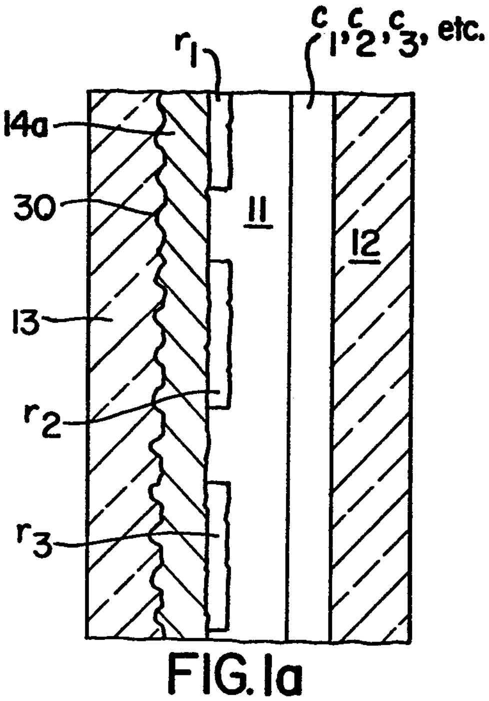


FIG. 1a

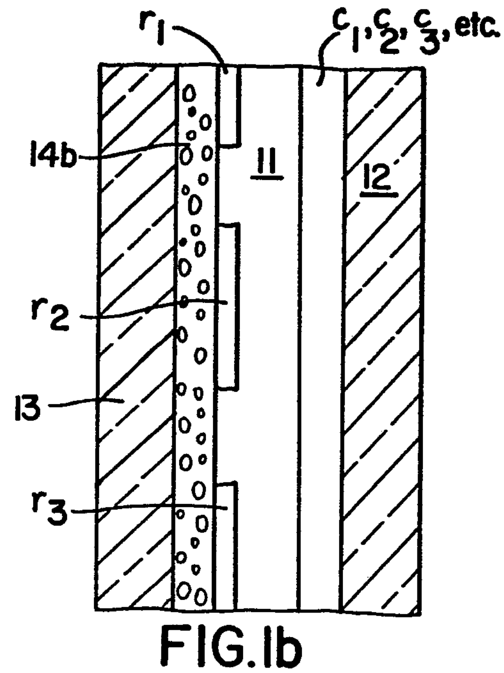


FIG. 1b

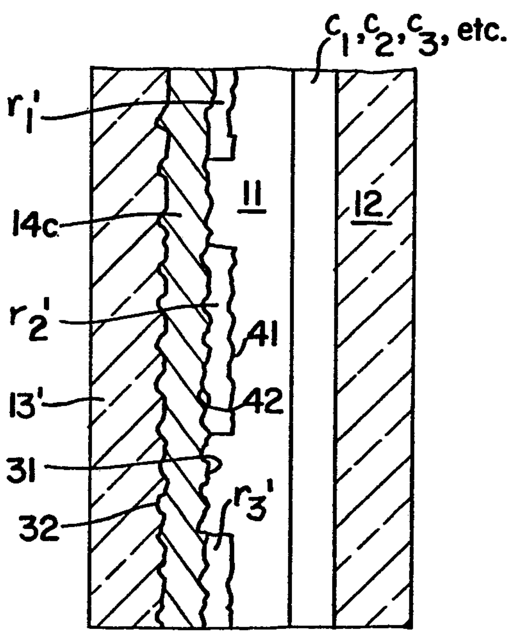


FIG. 1c

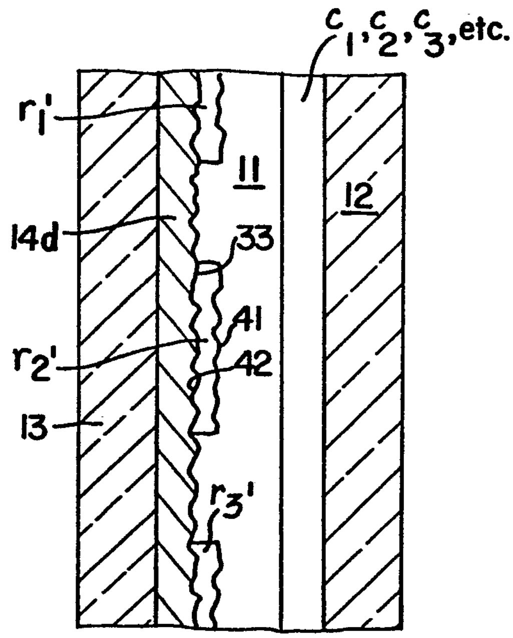


FIG. 1d

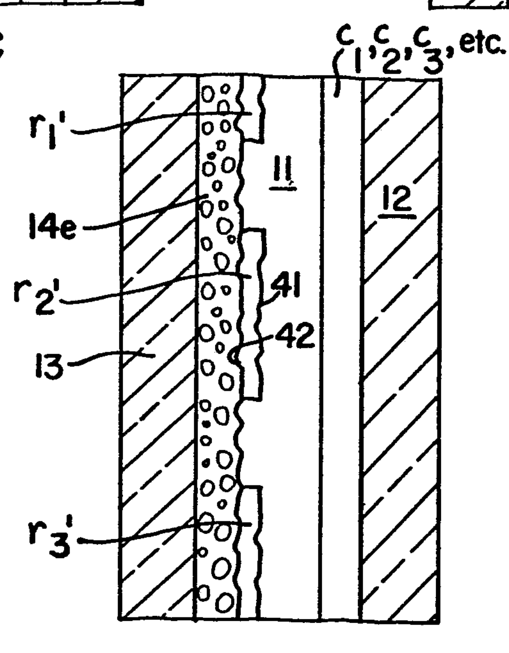


FIG. 1e